# EUROPÄISCHE PATENTSCHRIFT

(11) **EP 1 385 765 B1**
(45) Veröffentlichungstag und Bekanntmachung des Hinweises auf die Patenterteilung: **11.04.2007**
(21) Anmeldenummer: 02730189.4
(22) Anmeldetag: 22.04.2002
(51) Int. Cl.: B65G 67/20

(54) **VORRICHTUNG ZUM BELADEN UND/ODER ENTLADEN EINES TRANSPORTLADERAUMS**
DEVICE FOR LOADING AND/OR UNLOADING A TRANSPORT CARGO HOLD
DISPOSITIF POUR CHARGER ET/OU DECHARGER UN COMPARTIMENT A MARCHANDISES

(30) Priorität: 26.04.2001 DE 10120576; 20.06.2001 DE 10129570
(43) Veröffentlichungstag der Anmeldung: 04.02.2004
(73) Patentinhaber: BSH Bosch und Siemens Hausgeräte GmbH, 81739 München (DE)
(72) Erfinder: CLASSEN, Egbert, 86637 Wertingen (DE); SOHN, Klaus, 75015 Bretten (DE)
(86) Internationale Anmeldenummer: PCT/EP2002/004413
(87) Internationale Veröffentlichungsnummer: WO 2002/088010

(56) Entgegenhaltungen:
- US-A- 3 788 500

## Beschreibung

Die Erfindung geht aus von einer Vorrichtung zum Beladen und/oder Entladen eines Transportladeraums nach dem Oberbegriff des Anspruchs 1.

Es sind gattungsgemäße Vorrichtungen zum Beladen und Entladen von Transportladeräumen von Nutzkraftfahrzeugen mit Förderbändern bekannt. Die Vorrichtungen besitzen ein erstes, in einem Ladebereich installiertes Förderband und ein zweites, im Transportladeraum installiertes Förderband. Zum Beladen eines Transportladeraums werden mehrere, zu transportierende Wareneinheiten auf das im Ladebereich installierte Förderband gestellt. Anschließend werden die Förderbänder im Ladebereich und im Transportladeraum synchron angetrieben und die Wareneinheiten in den Transportladeraum gefördert.

Die Aufgabe der Erfindung besteht insbesondere darin, eine kostengünstige, flexibel einsetzbare und effiziente gattungsgemäße Vorrichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Aus der US-A-3 788 500 ist eine Vorrichtung und ein System zum automatischen Be- und Entladen von Fahrzeugen, wie z. B. Lastkraftwagen oder Anhängern, bekannt. Ein Führungsträger kann mit einem Endabschnitt in das Innere eines Anhängers eingeführt werden. Ein als Kombination aus einem Brückenkran mit einer Hubeinrichtung eines Gabelstaplers gebildeter Stapelkran kann automatisch entlang des Führungsträgers in das Fahrzeug zum automatischen Laden und Entladen des Selbigen bewegt werden. Zum Be- und Entladen muss der Stapelkran mit einer Greifeinrichtung die zu verladenden Güter umgreifen, so dass eine formschlüssige Verbindung zwischen mit dem zu verladenden Gut besteht.

Die Erfindung geht aus von einer Vorrichtung zum Beladen und/oder Entladen eines Transportladeraums, insbesondere von Nutzkraftfahrzeugen, mit wenigstens einer Fördereinheit, über die insbesondere mehrere Wareneinheiten gleichzeitig förderbar sind.

Es wird vorgeschlagen, dass die Fördereinheit zumindest teilweise in den Transportladeraum einführbar ist. Der Transportladeraum kann in wenigen, vorzugsweise in einem Arbeitsgang in kurzer Zeit mit einer großen Anzahl an Wareneinheiten vollständig beladen und/oder entladen werden. Wartezeiten an Ladebereichen können reduziert und der Nutzungsgrad von Nutzkraftfahrzeugen kann erhöht und insbesondere können kostenintensive Umrüstarbeiten von Transportladeräumen mit zusätzlichen Sondervorrichtungen vermieden werden. Ferner kann ein vorteilhaftes Beladen und/oder Entladen zahlreich verschiedener Standardtransportladeräume und dadurch ein besonders flexibler Einsatz erreicht werden. Die erfindungsgemäße Vorrichtung kann bei verschiedenen, dem Fachmann als sinnvoll erscheinenden Anwendungsgebieten eingesetzt werden, wie beispielsweise beim Be- und Entladen von Bahncontainern, Schiffscontainern usw., jedoch insbesondere beim Be- und Entladen von Nutzkraftfahrzeug-Transportladeräumen, die häufig nur ihrer Längsrichtung nach beladen werden können.

Die Fördereinheit kann als frei verfahrbare Einheit ausgebildet sein, die über einen eigenen Antrieb verfügt oder manuell oder über ein separates Fördermittel bewegbar ist, beispielsweise über einen Hubwagen usw. Besonders vorteilhaft ist die Fördereinheit jedoch in einem Ladebereich installiert. Es kann eine einfache Steuerung der Fördereinheit erreicht und insbesondere können vorhandene Gebäude im Ladebereich zur Lagerung von Teilen der Fördereinheit genutzt werden, beispielsweise zur Lagerung von einer Führungs- und/oder Trägereinheit, von einer Antriebseinheit usw.

Besitzt die Fördereinheit wenigstens eine Greifeinheit und wenigstens eine Hebeeinheit, über die die Wareneinheiten von ihrer Unterlage abhebbar sind, können die Wareneinheiten unabhängig von Bodenverhältnissen und möglicherweise ohne Rampe in den und aus dem Transportladeraum gefördert werden. Es ist eine flexible Handhabung erreichbar. Die Greifeinheit kann auf verschiedene, dem Fachmann als sinnvoll erscheinende Arten realisiert sein, beispielsweise kann über die Greifeinheit zu den Wareneinheiten eine kraft- und/oder formschlüssige Verbindung hergestellt werden, und die Greifeinheit kann dabei elektrisch, hydraulisch, pneumatisch und/oder manuell angetrieben sein. Ist die Greifeinheit als Klemmeinheit ausgeführt, können verschiedene Wareneinheiten, ohne daß diese entsprechend mit Halteelementen ausgeführt werden müssen, einfach gegriffen werden.

Es ist denkbar, daß mit einer einzelnen Greifeinheit in Belade-/Entladerichtung mehrere, möglicherweise gestapelte Wareneinheiten greifbar sind. Sind jedoch zumindest zwei Greifeinheiten in Belade-/Entladerichtung hintereinander vorgesehen, können die Wareneinheiten besonders exakt und sicher gegriffen werden, und zwar insbesondere, wenn je Wareneinheit in Belade-/Entladerichtung bzw. je Querreihe eine Greifeinheit vorgesehen ist. Ferner können kleine Greifeinheiten realisiert werden, die beispielsweise in einem Schadensfall oder zur Anpassung an sich verändernde Randbedingungen, wie beispielsweise unterschiedlich lange Transportladeräume, flexibel ausgetauscht, hinzugefügt und/oder entfernt werden können.

In einer weiteren Ausgestaltung der Erfindung wird vorgeschlagen, daß die Greifeinheit mit wenigstens einer in den Transportladeraum einführbaren Führungs- und/oder Trägereinheit der Fördereinheit wirkungsmäßig verbunden ist, wodurch eine vorteilhafte Führung und Positionierung der Wareneinheiten erreicht werden kann. Die Führungs- und/oder Trägereinheit kann von verschiedenen, dem Fachmann als sinnvoll erscheinenden Bauteilen oder Baugruppen gebildet sein, wie beispielsweise von einem Führungsgestell usw. Besonders vorteilhaft ist die Führungs- und/oder Trägereinheit jedoch von einem oder mehreren Balken gebildet, beispielsweise mit einem Doppel-T-Profil, wodurch eine besonders platzsparende Konstruktion realisierbar ist. Ist die Führungseinheit mit einer Trägereinheit einstückig ausgeführt, können zusätzliche Bauteile, Bauraum, Montageaufwand und Kosten eingespart werden.

Ist die Führungs- und/oder Trägereinheit oberhalb einem Aufnahmebereich der Greifeinheit angeordnet, kann eine vorteilhaft schmale Konstruktion erzielt werden, und zwar indem seitliche Träger- und/oder Führungsteile vermieden werden können. Die Führungs- und/oder Trägereinheit kann dabei in einem Gestell oder vorteilhaft an einer häufig bereits vorhandenen Gebäudedecke, beispielsweise eines Lagergebäudes, gelagert sein, wodurch wiederum zusätzliche Bauteile und Bauraum eingespart werden können. Grundsätzlich kann die Führungs- und/oder Trägereinheit jedoch auch seitlich von einem Aufnahmebereich der Greifeinheit angeordnet sein.

Ferner wird vorgeschlagen, daß die Greifeinheit an der Führungs- und/oder Trägereinheit verschiebbar gelagert ist, beispielsweise über Wälzlager oder Gleitlager. Eine Belastung während des Einführens der Führungs- und/oder Trägereinheit in den Transportladeraum durch eine Gewichtskraft der Wareneinheiten kann vermieden und es kann eine kostengünstige Lagerung der Führungs- und/oder Trägereinheit realisiert werden. Ferner kann vorteilhaft an der Führungs- und/oder Trägereinheit, an ihrem in Richtung des Transportladeraums weisenden Ende ein Stützelement vorgesehen werden, beispielsweise ein teleskopartig ausfahrbarer Stützfuß, der nach dem Einführen der Führungs- und/oder Trägereinheit in den Transportladeraum und vor dem Fördern der Wareneinheiten ausgefahren werden kann. Auf die Führungs- und/oder Trägereinheit wirkende große Momente aufgrund langer Hebelarme können vermieden und es kann eine kostengünstige Konstruktion erreicht werden.

Besitzt die Greifeinheit neben einem ersten Bewegungsfreiheitsgrad zumindest einen zweiten Bewegungsfreiheitsgrad, kann die Vorrichtung flexibel an eine Position des Transportladeraums und/oder an eine Position der bereitgestellten Wareneinheiten angepaßt werden. Die Greifeinheit kann um eine oder mehrere Achsen schwenkbar und in eine oder mehrere Richtungen translatorisch bewegbar ausgeführt sein. Dabei kann die Greifeinheit an der Führungs- und/oder Trägereinheit entsprechend gelagert und/oder es kann die Führungs- und/oder Trägereinheit entsprechend gelagert ausgeführt sein. Ist die Greifeinheit über eine Traverse quer verfahrbar, können insbesondere einfach quer zur Belade-/Entladerichtung mehrere bereitgestellte Wareneinheiten gegriffen und gefördert werden. Entsprechende Traversen können besonders einfach realisiert werden, wenn die Führungs- und/oder Trägereinheit an einer Gebäudedecke gelagert ist. Anstatt einer Traverse ist grundsätzlich auch denkbar, ein Bodenelement eines Ladebereichs in verschiedene Richtungen bewegbar auszuführen, um Wareneinheiten in einen Griffbereich der Fördereinheit zu bringen.

Die Greifeinheit kann um verschiedene Achsen und in verschiedene Richtungen antreibbar ausgeführt und/oder auch vorteilhaft während eines Belade- und/oder Entladevorgangs hinsichtlich zumindest einem Bewegungsfreiheitsgrad freibeweglich bzw. schwimmend gelagert sein, so daß sich diese selbständig zumindest in begrenztem Umfang an eine Position des Transportladeraums als auch an eine Position der bereitgestellten Wareneinheiten anpassen kann. Um zu erreichen, daß die Greifeinheit hinsichtlich zumindest einem Bewegungsfreiheitsgrad frei beweglich ist, kann es sinnvoll sein, die Greifeinheit zumindest teilweise von einer Antriebseinheit zu entkoppeln, die eine freie Bewegung durch Widerstandskräfte behindern könnte.

Ist zumindest eine Wareneinheit über Stützrollen abstützbar, und zwar insbesondere auf einem Boden des Transportladeraums und/oder auf einem Boden des Ladebereichs, kann eine aufwendige Lagerung einer Trägereinheit vermieden werden. Die Trägereinheit kann in ihrer Funktion durch die Stützrollen unterstützt oder vollständig ersetzt werden. Anstatt Stützrollen sind auch Gegenbiegeeinheiten denkbar, beispielsweise mit einem auf eine Trägereinheit einwirkenden hydraulisch, pneumatisch und/oder elektrisch angetriebenen Stößel. Gegenbiegeeinheiten sind insbesondere aus dem Bereich der Kalandriertechnik bekannt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte erfindungsgemäße Vorrichtung bei einem Beladevorgang vor dem Einführen eines Trägerbalkens in einen Transportladeraum,
- Fig. 2: die Vorrichtung aus Fig. 1 nach dem Einführen des Trägerbalkens in den Transportladeraum,
- Fig. 3: die Vorrichtung aus Fig. 2 nach dem Beladevorgang,
- Fig. 4: die Vorrichtung aus Fig. 1 in einer schematischen Frontansicht vor einem Hebevorgang,
- Fig. 5: die Vorrichtung aus Fig. 4 nach dem Hebevorgang,
- Fig. 6: die Vorrichtung aus Fig. 1 in einer Frontansicht beim Greifen neuer Wareneinheiten,
- Fig. 7: eine Darstellung einer zu Fig. 1 alternativen Vorrichtung mit Stützrollen von oben,
- Fig. 8: einen Schnitt entlang der Linie VIII-VIII in Fig. 7 vor einem Hebevorgang,
- Fig. 9: einen Schnitt entlang der Linie VIII-VIII in Fig. 7 nach einem Hebevorgang,
- Fig. 10: eine Darstellung einer zu Fig. 1 alternativen Vorrichtung mit einem separat einführbaren Trägerbalken vor einem Beladevorgang,
- Fig. 11: die Vorrichtung aus Fig. 10 nach dem Einführen des Trägerbalkens in einen Transportladeraum,
- Fig. 12: die Vorrichtung aus Fig. 11 bei ausgefahrenem Stützfuß,
- Fig. 13: die Vorrichtung aus Fig. 12 nach dem Beladevorgang und
- Fig. 14: eine Darstellung einer zu Fig. 7 alternativen Vorrichtung mit einer frei verfahrbaren Fördereinheit.

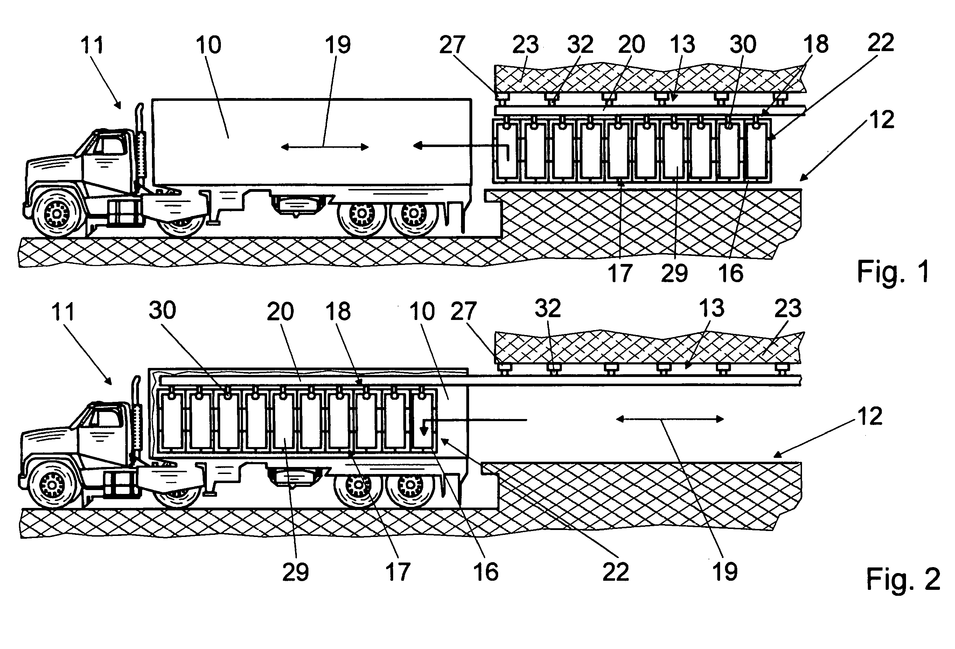

Fig. 1 zeigt eine schematisch dargestellte Vorrichtung zum Beladen und Entladen von Transportladeräumen 10, und zwar von Nutzkraftfahrzeugen 11. Die Vorrichtung besitzt eine in einem Ladebereich 12 installierte Fördereinheit 13, über die mehrere Wareneinheiten 16 gleichzeitig aus dem Ladebereich 12 in den Transportladeraum 10 förderbar sind.

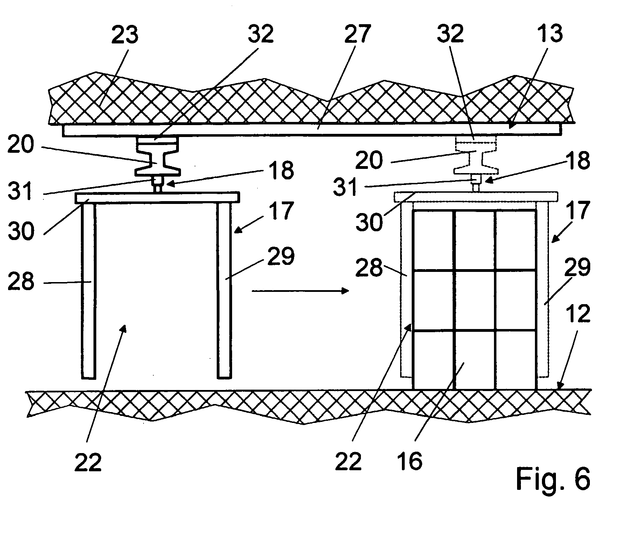

Die Fördereinheit 13 besitzt einen über eine Führungseinheit 32 und über Traversen 27 an einer Gebäudedecke 23 eines nicht näher dargestellten Lagergebäudes gelagerten Trägerbalken 20 mit einem Doppel-T-Profil, an dem in Belade-/Entladerichtung 19 hintereinander zehn Klemmeinheiten 17 befestigt sind. Der Trägerbalken 20 ist oberhalb einem Aufnahmebereich 22 der Klemmeinheiten 17 angeordnet. Die Klemmeinheiten 17 besitzen zwei im wesentlichen vertikal ausgerichtete Schenkel 28, 29 und einen Querbalken 30, an dem die Schenkel 28, 29 aufeinander zu bewegbar und hydraulisch antreibbar gelagert sind (Fig. 4 und 5).

Der Querbalken 30 ist mit dem Trägerbalken 20 über einen eine Hebeeinheit 18 bildenden hydraulischen Hubzylinder 31 verbunden, über den die Wareneinheiten 16 in den Klemmeinheiten 17 von ihrer Unterlage abhebbar sind. Möglich ist auch, zwischen den Schenkeln 28, 29 eine Hebeeinheit vorzusehen oder den Trägerbalken 20 über eine zentrale Hebeeinheit anhebbar auszuführen.

Zum Beladen des Transportladeraums 10 werden mit den Klemmeinheiten 17 bereitgestellte, in drei Reihen nebeneinander angeordnete und dreifach übereinander gestapelte Wareneinheiten 16 überfahren. Dabei wird der Trägerbalken 20 mit der Führungseinheit 32 in den an der Gebäudedecke 23 befestigten Traversen 27 quer zur Belade-/Entladerichtung 19 vor oder hinter die bereitgestellten Wareneinheiten 16 und anschlie-ßend in der Führungseinheit 32 in Längsrichtung über die Wareneinheiten 16 bewegt (Fig. 6). Bei ausreichend hohen Gebäuden wäre auch denkbar, daß die Klemmeinheiten 17 über eine Hebeeinheit soweit angehoben werden, bis diese quer über die bereitgestellten Wareneinheiten 16 bewegt werden können.

Kommen die Schenkel 28, 29 der Klemmeinheiten 17 seitlich neben den Wareneinheiten 16 in ihrer gewünschten Position zum Liegen, werden die Wareneinheiten 16 mit den Klemmeinheiten 17 gegriffen, und zwar je Klemmeinheit 17 vorzugsweise neun Wareneinheiten 16 bzw. eine Querreihe der Wareneinheiten 16 oder bei einer überlappenden Greiftechnik achtzehn Wareneinheiten 16.

Sind die Wareneinheiten 16 in den Klemmeinheiten 17 sicher fixiert, werden diese jeweils über die Hubzylinder 31 der Hebeeinheit 18 von ihrer Unterlage angehoben. Anschlie-ßend wird der Trägerbalken 20 mit den Klemmeinheiten 17 und den darin gesicherten Wareneinheiten 16 in den Transportladeraum 10 eingeführt (Fig. 2). Der Trägerbalken 20 wird dabei in der Führungseinheit 32 in Längsrichtung verschoben. Um zu erreichen, daß sich die Fördereinheit 13 an die Position des Transportladeraums 10 anpassen kann, ist der Trägerbalken 20 während dem Einführen in den Transportladeraum 10 in den Traversen 27 in Querrichtung frei beweglich. Um einen Winkelversatz auszugleichen, ist auch denkbar, den Trägerbalken 20 um eine vertikale und/oder horizontale Achse schwenkbar auszuführen.

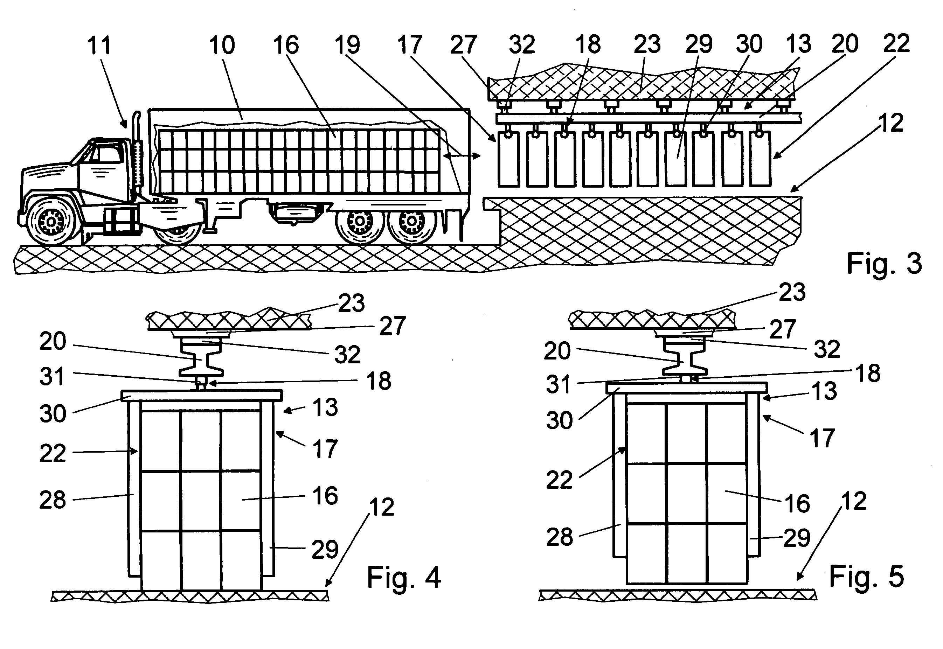

Nachdem die Wareneinheiten 16 in den Transportladeraum 10 eingeführt sind, werden die Wareneinheiten 16 über die Hebeeinheit 18 auf einem Boden des Transportladeraums 10 abgestellt, und die Klemmeinheiten 17 werden geöffnet. Anschließend wird der Trägerbalken 20 mit den Klemmeinheiten 17 aus dem Transportladeraum 10 herausgeführt (Fig. 3).

Bei einem nicht näher dargestellten Entladevorgang des Transportladeraums 10, wird der Trägerbalken 20 mit den leeren Klemmeinheiten 17 über die Wareneinheiten 16 im Transportladeraum 10 geführt, die Klemmeinheiten 17 werden geschlossen, die Wareneinheiten 16 werden mit der Hebeeinheit 18 angehoben, und anschließend wird der Trägerbalken 20 mit den Klemmeinheiten 17 und den darin befestigten Wareneinheiten 16 aus dem Transportladeraum 10 gefördert.

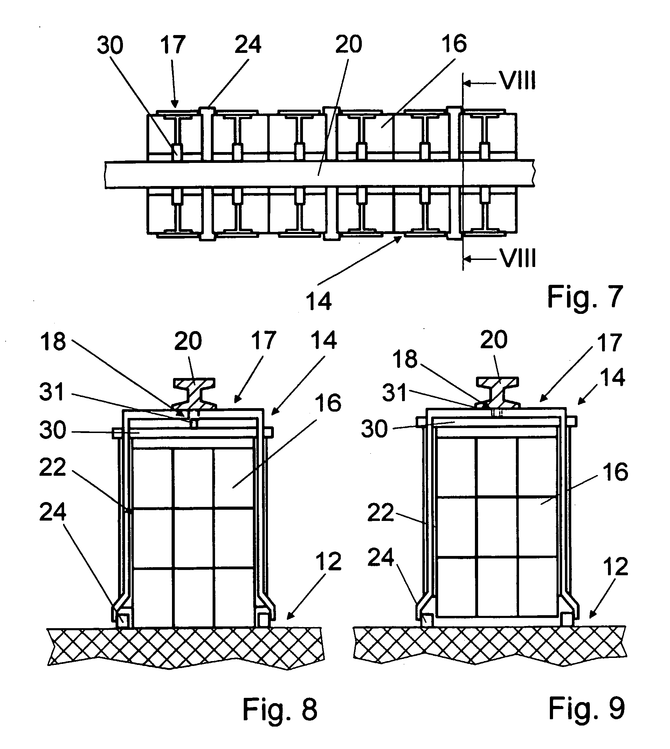

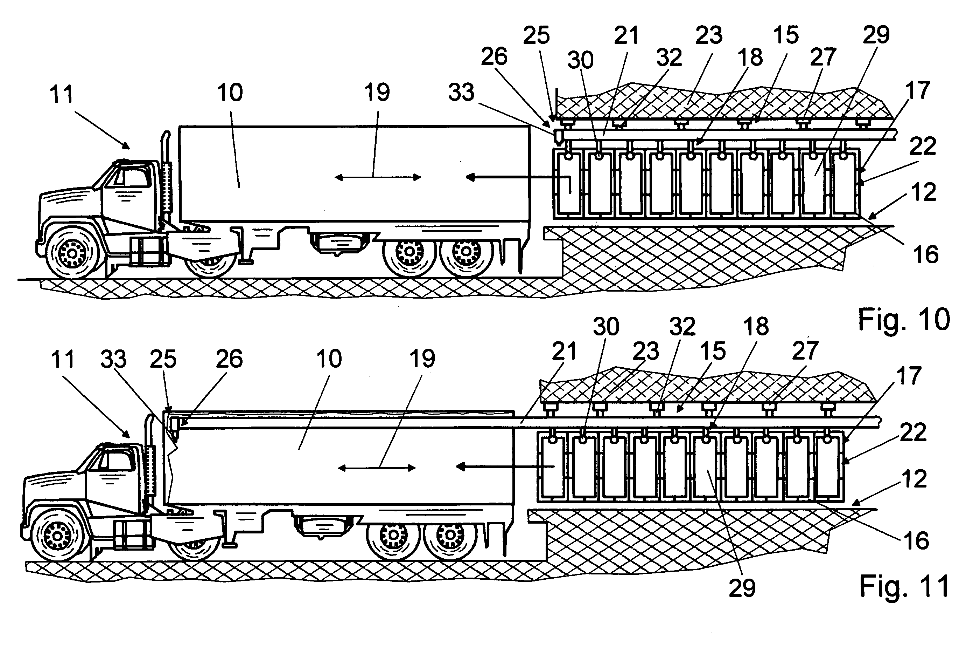

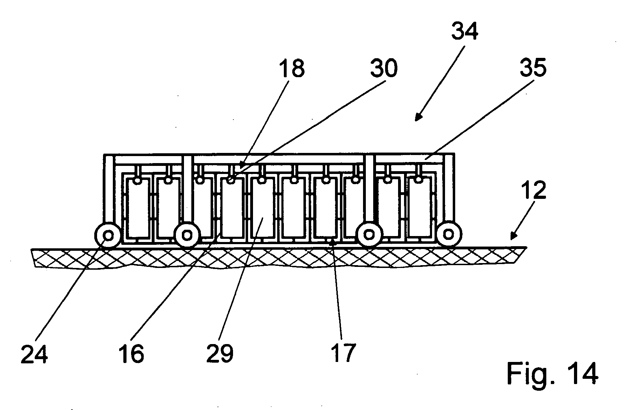

In den Fig. 7 bis 9 ist eine erste alternative Vorrichtung, in den Fig. 10 bis 13 ist eine zweite alternative Vorrichtung und in Fig. 14 ist eine dritte alternative Vorrichtung dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im wesentlichen auf die Unterschiede zum Ausführungsbeispiel in den Fig. 1 bis 6.

Die Vorrichtung in den Fig. 7 bis 9 besitzt eine Fördereinheit 14, bei der an einem Trägerbalken 20 über U-förmige Gestelle Stützrollen 24 befestigt sind. Zu transportierende Wareneinheiten 16 können über Klemmeinheiten 17, den Trägerbalken 20, die U-förmigen Gestelle und über die Stützrollen 24 an einem Boden eines Ladebereichs 12 und an einem Boden eines Transportladeraums 10 abgestützt werden. Der Trägerbalken 20 wird durch die Stützrollen 24 in seiner Tragfunktion unterstützt und dient im wesentlichen zur seitlichen Führung. Um zu erreichen, daß die Klemmeinheiten 17 mit den Wareneinheiten 16 einer Bodenneigung, insbesondere im Transportladeraum 10 folgen können, ist der Trägerbalken 20 in vertikaler Richtung frei beweglich gelagert.

Die Vorrichtung in den Fig. 10 bis 13 besitzt eine Fördereinheit 15, bei der an einem Trägerbalken 21 Klemmeinheiten 17 verschiebbar gelagert sind, und zwar über nicht näher dargestellte Wälzlager. Zum Beladen eines Transportladeraums 10 wird zuerst der Trägerbalken 21 ohne die Klemmeinheiten 17 in den Transportladeraum 10 eingeführt. An dem Trägerbalken 21 ist an dessen in Richtung des Transportladeraums 10 weisenden Ende 25 ein Stützelement 26 befestigt, das von einem teleskopartigen, hydraulisch ausfahrbaren Stützfuß 33 gebildet ist.

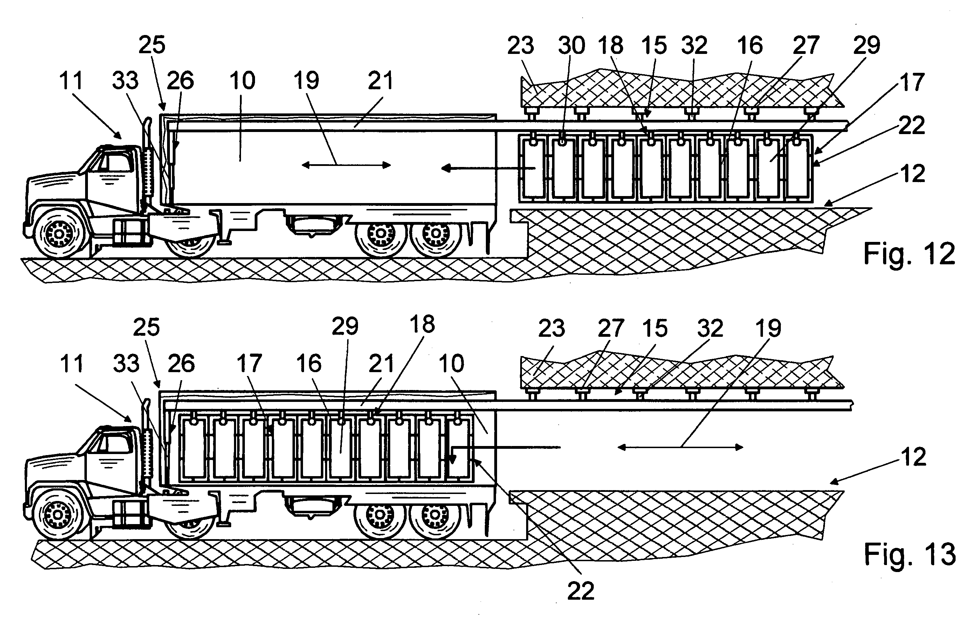

Ist der Trägerbalken 21 vollständig in den Transportladeraum 10 eingeführt (Fig. 11), wird der Stützfuß-33 ausgefahren (Fig. 12). Anschließend werden die Klemmeinheiten 17 mit den darin gesicherten und über eine Hebeeinheit 18 angehobene Wareneinheiten 16 hängend entlang dem Trägerbalken 21 in den Transportladeraum 10 gefördert (Fig. 13).

Nachdem die Wareneinheiten 16 über die Hebeeinheit 18 abgesetzt, die Klemmeinheiten 17 geöffnet und der Stützfuß 33 wieder eingefahren ist, wird der Trägerbalken 21 gemeinsam mit den Klemmeinheiten 17 aus dem Transportladeraum 10 geführt.

Die Vorrichtung in Fig. 14 besitzt eine frei verfahrbare Fördereinheit 34, bei der an einer Trägereinheit 35 über U-förmige Gestelle Stützrollen 24 befestigt sind. Zu transportierende Wareneinheiten 16 können über Klemmeinheiten 17, die Trägereinheit 35, die U-förmigen Gestelle und über die Stützrollen 24 an einem Boden eines Ladebereichs 12 und an einem Boden eines Transportladeraums abgestützt werden. Die Fördereinheit 34 ist über einen integrierten nicht näher dargestellten Motor antreibbar und über Funk steuerbar. Grundsätzlich wäre jedoch auch denkbar, daß die Fördereinheit 34 über einen Hubwagen oder manuell verfahren wird.

### Bezugszeichen

- 10: Transportladeraum
- 11: Nutzkraftfahrzeug
- 12: Ladebereich
- 13: Fördereinheit
- 14: Fördereinheit
- 15: Fördereinheit
- 16: Wareneinheit
- 17: Greifeinheit
- 18: Hebeeinheit
- 19: Belade-/Entladerichtung
- 20: Führungs- und/oder Trägereinheit
- 21: Führungs- und/oder Trägereinheit
- 22: Aufnahmebereich
- 23: Gebäudedecke
- 24: Stützrolle
- 25: Ende
- 26: Stützelement
- 27: Traverse
- 28: Schenkel
- 29: Schenkel
- 30: Querbalken
- 31: Hubzylinder
- 32: Führungseinheit
- 33: Stützfuß
- 34: Fördereinheit
- 35: Führungs- und/oder Trägereinheit

## Patentansprüche

1. Vorrichtung zum Beladen und/oder Entladen eines Transportladeraums (10), insbesondere eines Nutzkraftfahrzeugs (11), mit wenigstens einer Fördereinheit (13, 14, 15, 34), über die insbesondere mehrere Wareneinheiten (16) gleichzeitig förderbar sind und die Fördereinheit (13, 14, 15, 34) zumindest teilweise in den Transportladeraum (10) einführbar ist, **dadurch gekennzeichnet, dass** die Fördereinheit (13, 14, 15, 34) wenigstens eine Klemmeinheit (17) und wenigstens eine Hebeeinheit (18) aufweist, über die die Wareneinheiten (16) von ihrer Unterlage abhebbar sind.

2. Vorrichtung nach Anspruch 1, **dadurch gekennzeichnet, dass** die Fördereinheit (13, 14, 15) in einem Ladebereich installiert sind.

3. Vorrichtung nach Anspruch 1 oder 2, **dadurch gekennzeichnet, dass** zumindest zwei Klemmeinheiten (17) in Belade-/Entladerichtung (19) hintereinander angeordnet sind.

4. Vorrichtung nach einem der vorhergehenden Ansprüche, **dadurch gekennzeichnet, dass** die Klemmeinheit (17) mit wenigstens einer in den Transportladeraum (10) einführbaren Führungs- und/oder Trägereinheit (20, 21, 35) der Fördereinheit (13, 14, 15, 34) wirkungsmäßig verbunden ist.

5. Vorrichtung nach Anspruch 4, **dadurch gekennzeichnet, dass** die Führungs- und/oder Trägereinheit (20, 21) oberhalb eines Aufnahmebereichs (22) der Klemmeinheit (17) angeordnet ist.

6. Vorrichtung nach Anspruch 4 oder 5 und Anspruch 2, **dadurch gekennzeichnet, dass** die Führungs- und/oder Trägereinheit (20, 21) an einer Gebäudedecke (23) gelagert ist.

7. Vorrichtung nach einem der Ansprüche 4 bis 6, **dadurch gekennzeichnet, dass** die Greifeinheit (17) an der Führungs- und/oder Trägereinheit (21) verschiebbar gelagert ist.

8. Vorrichtung nach Anspruch 7, **dadurch gekennzeichnet, dass** an der Führungs- und/oder Trägereinheit (21), an ihrem in Richtung des Transportladeraums (10) weisenden Ende (25) ein Stützelement (26) angeordnet ist.

9. Vorrichtung nach einem der vorhergehenden Ansprüche, **dadurch gekennzeichnet, dass** die Klemmeinheit (17) neben einem ersten Bewegungsfreiheitsgrad zumindest einen zweiten Bewegungsfreiheitsgrad aufweist.

10. Vorrichtung nach Anspruch 9, **dadurch gekennzeichnet, dass** die Klemmeinheit (17) über eine Traverse (27) quer zur Belade-/Entladerichtung (19) bewegbar gelagert ist.

11. Vorrichtung nach Anspruch 9 oder 10, **dadurch gekennzeichnet, dass** die Klemmeinheit (17) während eines Belade- und/oder Entladevorgangs hinsichtlich zumindest einem Bewegungsfreiheitsgrad freibeweglich ist.

12. Vorrichtung nach einem der vorhergehenden Ansprüche, **dadurch gekennzeichnet, dass** zumindest eine Wareneinheit (16) über Stützrollen (24) der Fördereinheit (14, 34) abstützbar ist.

## Claims

1. Device for loading and/or unloading a transport load compartment (10), particularly of a utility motor vehicle (11), with at least one conveyor unit (13, 14, 15, 34), by way of which, in particular, several freight units (16) can be conveyed simultaneously and the conveyor unit (13, 14, 15, 34) can be introduced at least partly into the transport load compartment (10), **characterised in that** the conveyor unit (13, 14, 15, 34) comprises at least one clamping unit (17) and at least one lifting unit (18) by way of which the freight units (16) can be raised from their support.

2. Device according to claim 1, **characterised in that** the conveyor unit (13, 14, 15) is installed in a loading region.

3. Device according to claim 1 or 2, **characterised in that** at least two clamping units (17) are arranged one behind the other in loading/unloading direction (19).

4. Device according to one of the preceding claims, **characterised in that** the clamping unit (17) is operatively connected with at least one guide and/or support unit (20, 21, 35), which is introducible into the transport load compartment (10), of the conveyor unit (13, 14, 15, 34).

5. Device according to claim 4, **characterised in that** the guide and/or support unit (20, 21) is or are arranged above a receiving region (22) of the clamping unit (17).

6. Device according to claim 4 or 5 and claim 2, **characterised in that** the guide and/or support unit (20, 21) is or are mounted at a building ceiling (23).

7. Device according to one of claims 4 to 6, **characterised in that** the gripper unit (17) is displaceably mounted at the guide and/or support unit (21).

8. Device according to claim 7, **characterised in that** a support element (26) is arranged at the guide and/or support unit (21) at its end (25) facing in the direction of the transport load compartment (10).

9. Device according to one of the preceding claims, **characterised in that** the clamping unit (17) has, apart from a first degree of movement freedom, at least one second degree of movement freedom.

10. Device according to claim 9, **characterised in that** the clamping unit (17) is mounted by way of a cross-member (27) to be movable transversely to the loading/unloading direction (19).

11. Device according to claim 9 or 10, **characterised in that** the clamping unit (17) is freely movable with respect to at least one degree of movement freedom during a loading and/or unloading process.

12. Device according to one of the preceding claims, **characterised in that** at least one freight unit (16) can be supported by way of support rollers (24) of the conveyor unit (14, 34).

## Revendications

1. Dispositif pour charger et/ou décharger un compartiment à marchandises (10), en particulier un véhicule utilitaire (11), comprenant au moins une unité de transport (13, 14, 15, 34), au moyen de laquelle plusieurs unités de marchandises (16) peuvent être notamment transportées et l'unité de transport (13, 14, 15, 34) pouvant être introduite dans le compartiment à marchandises (10) au moins partiellement, **caractérisé en ce que** l'unité de transport (13, 14, 15, 34) comporte au moins une unité de serrage (17) et au moins une unité de levage (18), au moyen desquelles les unités de marchandises (16) peuvent être soulevées de leur support.

2. Dispositif selon la revendication 1, **caractérisé en ce que** l'unité de transport (13, 14, 15) est installée dans une zone de chargement.

3. Dispositif selon la revendication 1 ou 2, **caractérisé en ce que** au moins deux unités de serrage (17) sont disposées l'une derrière l'autre dans la direction du chargement/déchargement (19).

4. Dispositif selon l'une des revendications précédentes, **caractérisé en ce que** l'unité de serrage (17) est reliée fonctionnellement à au moins une unité de guidage et/ou de support (20, 21, 35) de l'unité de transport (13, 14, 15, 34) pouvant être introduite dans le compartiment à marchandises (10).

5. Dispositif selon la revendication 4, **caractérisé en ce que** l'unité de guidage et/ou de support (20, 21) est disposée au dessus d'une zone de logement (22) de l'unité de serrage (17).

6. Dispositif selon la revendication 4 ou 5 et la revendication 2, **caractérisé en ce que** l'unité de guidage et/ou de support (20, 21) est logée au plafond d'un bâtiment (23).

7. Dispositif selon l'une des revendications 4 à 6, **caractérisé en ce que** l'unité de préhension (17) est logée de manière déplaçable sur l'unité de guidage et/ou de support (21).

8. Dispositif selon la revendication 7, **caractérisé en ce que** un élément de support (26) est disposé à l'extrémité (25) orientée en direction du compartiment à marchandises (10) de l'unité de guidage et/ou de support (21).

9. Dispositif selon l'une des revendications précédentes, **caractérisé en ce que** l'unité de serrage (17), outre un premier degré de liberté de mouvement, présente au moins un second degré de liberté de mouvement.

10. Dispositif selon la revendication 9, **caractérisé en ce que** l'unité de serrage (17) est logée de manière mobile au moyen d'une traverse (27) transversalement à la direction de chargement/déchargement (19).

11. Dispositif selon la revendication 9 ou 10, **caractérisé en ce que** l'unité de serrage (17) est librement déplaçable en ce qui concerne au moins un degré de liberté de mouvement pendant une opération de chargement et/ou de déchargement.

12. Dispositif selon l'une des revendications précédentes, **caractérisé en ce que** au moins une unité de marchandises (16) peut être appuyée sur des galets de support (24) dans une unité de transport (14, 34).
